# EUROPÄISCHE PATENTSCHRIFT

(11) **EP 2 653 761 B1**
(45) Veröffentlichungstag und Bekanntmachung des Hinweises auf die Patenterteilung: **27.09.2017**
(21) Anmeldenummer: 13163171.5
(22) Anmeldetag: 10.04.2013
(51) Int. Cl.: F16K 31/08, F16K 11/048

(54) **Druckbetätigtes Umschaltventil für eine Sanitäreinrichtung**
Pressure-actuated reversing valve for a sanitary device
Soupape de commutation actionnée par pression pour un dispositif sanitaire

(30) Priorität: 16.04.2012 DE 102012206182
(43) Veröffentlichungstag der Anmeldung: 23.10.2013
(73) Patentinhaber: Hansgrohe SE, 77761 Schiltach (DE)
(72) Erfinder: Melle, Fabian, 77799 Ortenberg (DE)
(74) Vertreter: Patentanwälte Ruff, Wilhelm, Beier, Dauster & Partner mbB

(56) Entgegenhaltungen:
- EP-A1- 1 760 376
- US-A- 4 664 150
- US-A- 5 174 731
- US-A- 6 092 545

## Beschreibung

Die Erfindung betrifft ein druckbetätigtes Umschaltventil für eine Sanitäreinrichtung.

Bei Sanitäreinrichtungen kann das Problem auftreten, dass dann, wenn der Wasserdruck zu einem Auslauf aus der Sanitärarmatur zu hoch wird, das Wasser zu einem anderen Auslauf umgeleitet werden soll. Man benutzt dazu ein Ventil, das durch den Druck des Wassers selbst umgeschaltet wird.

Die Funktionsweise ist so, dass das Wasser, das durch das Ventil hindurch strömt, durch seinen Druck auf ein bewegbares Element des Ventils einwirkt, das bei Erreichen eines bestimmten Drucks eine zweite Öffnung freigibt. Das bewegbare Element muss aber bei Nachlassen des Drucks wieder zurückgestellt werden. Beim Öffnen der zweiten Öffnung verringert sich dadurch der statische Druck innerhalb des Ventils, der zur Umschaltung führt. Bei Verwendung einer Feder besteht nun die Gefahr, dass ein instabiler Zustand entsteht, der zu einem Hin- und Hergehen des Ventilschließkörpers führt.

Bei einem bekannten Impulsventil, bei dem der Ventilschließkörper zwei Endstellungen aufweist, ist vorgesehen, dass jeweils ein Permanentmagnet den Ventilschließkörper in den Endstellungen festhält (EP 1760376 A1).

Weiterhin ist ein Verfahren bzw. eine Anordnung zum Kontrollieren einer mit Druckluft betriebenen Doppelmembranpumpe bekannt, bei der ein Steuerkolben zwei Endstellungen aufweist, in die er jeweils durch entsprechende Beaufschlagung mit Steuerdruckluft gebracht und in denen er jeweils durch eine magnetbasierte Haltevorrichtung gehalten wird (US 5 174 731 A).

Der Erfindung liegt die Aufgabe zu Grunde, ein druckbetätigtes Umschaltventil für eine Sanitäreinrichtung zu schaffen, das bei einfachem Aufbau zu einem korrekten Umschalten führt, ohne dass die Gefahr einer Instabilität bzw. einer Regelschwingung auftritt.

Zur Lösung dieser Aufgabe schlägt die Erfindung ein druckbetätigtes Umschaltventil mit den im Anspruch 1 genannten Merkmalen vor. Weiterbildungen der Erfindung sind Gegenstand von Unteransprüchen.

Die Zurückstellung des Ventilschließkörpers in die Ausgangsposition geschieht mithilfe mindestens eines Magneten. Im Gegensatz zu einer Feder verringert sich die Rückstellkraft eines Magneten mit zunehmendem Abstand von seinem Gegenelement, also beispielsweise ebenfalls einem Magneten oder einem sonstigen ferromagnetischen Bauteil. Es tritt also nach dem Umschalten, wenn der die Bewegung verursachende Druck nachlässt, noch keine Rückstellung auf, die zu einer Regelschwingung führen könnte. Die Rückstellung erfolgt erst bei weiterem Abfallen des Drucks.

Erfindungsgemäß kann in Weiterbildung vorgesehen sein, dass der Ventilschließkörper einen Kolben aufweist oder mit einem Kolben verbunden ist, der eine Kolbenfläche enthält, die dem Druck des Wassers im Einlassbereich des Ventils ausgesetzt ist. Der durch das Wasser auf die Kolbenfläche ausgeübte Druck wird dazu verwendet, den Ventilschließkörper zu betätigen.

Insbesondere kann vorgesehen sein, dass der Ventilschließkörper selbst als Kolben mit einer Kolbenfläche ausgebildet ist, die dem Druck des Wassers im Einlassbereich des Ventils ausgesetzt ist.

Die Erfindung schlägt vor, dass das Umschaltventil als Ventilkartusche zum Einsetzen in ein Armaturengehäuse ausgebildet sein kann.

In nochmaliger Weiterbildung der Erfindung kann vorgesehen sein, dass die Auslassöffnungen in einer Mantelfläche des Umschaltventils ausgebildet sein können.

Erfindungsgemäß kann in Weiterbildung vorgesehen sein, das die Einlassöffnung in das Ventil in einer Stirnfläche des Umschaltventils ausgebildet sein kann, so dass das Wasser axial in das Ventil einströmt.

Erfindungsgemäß kann vorgesehen sein, dass ein Magnet in einem gehäusefesten Teil des Umschaltventils angeordnet ist und mit einem ferromagnetischen Element des Ventilschließkörpers zusammenwirkt. Insbesondere kann auch vorgesehen sein, dass in dem Ventilschließkörper ebenfalls ein Permanentmagnet angeordnet ist.

In nochmaliger Weiterbildung der Erfindung kann vorgesehen sein, dass in der Ausgangsposition des Ventilschließkörpers zwischen dem Magneten und seinem Gegenelement, bei dem es sich ebenfalls um einen Magneten oder um ein ferromagnetisches Bauteil handeln kann, ein Abstand vorhanden ist. Wenn der Magnet und sein Gegenelement direkt aneinander haften, wird die Kraft zum Trennen der beiden Teile zu groß, so dass die Gefahr besteht, dass das Ventil nicht umschaltet.

Erfindungsgemäß kann das von der Erfindung vorgeschlagene druckbetätigte Umschaltventil so ausgebildet sein, dass in der Ausgangsposition des Ventilschließkörpers ein Auslass aus dem Ventil geöffnet und ein zweiter Auslass aus dem Ventil geschlossen ist.

Es ist aber ebenfalls möglich und wird von der Erfindung vorgeschlagen, dass in der Ausgangsposition des Ventilschließkörpers beide Auslässe aus dem Ventil geschlossen sind. Diese Anordnung könnte beispielsweise verwendet werden, wenn man ein Ventil schaffen will, das im Normalfall geschlossen ist. Hier würde das Öffnen der Zuleitung zu dem Ventil ebenfalls dazu führen, dass, nachdem zunächst der erste Auslass geöffnet wurde, bei Überschreiten eines bestimmten Drucks umgeschaltet wird.

Denkbar ist eine Ausbildung eines solchen Ventils auch als Umschaltventil in der Weise, dass der zweite Auslass aus dem Ventil zusätzlich geöffnet wird, und der erste Auslass geöffnet bleibt.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: einen axialen Längsschnitt durch eine ein Umschaltventil bildende Ventilkartusche;
- Figur 2: einen Schnitt durch die Anordnung der Figur 1 in umgeschaltetem Zustand;
- Figur 3: eine Stirnansicht der Anordnung der Figur 1 bzw. 2 von oben;
- Figur 4: eine Explosionsdarstellung der Einzelteile des von der Erfindung vorgeschlagenen Umschaltventils.

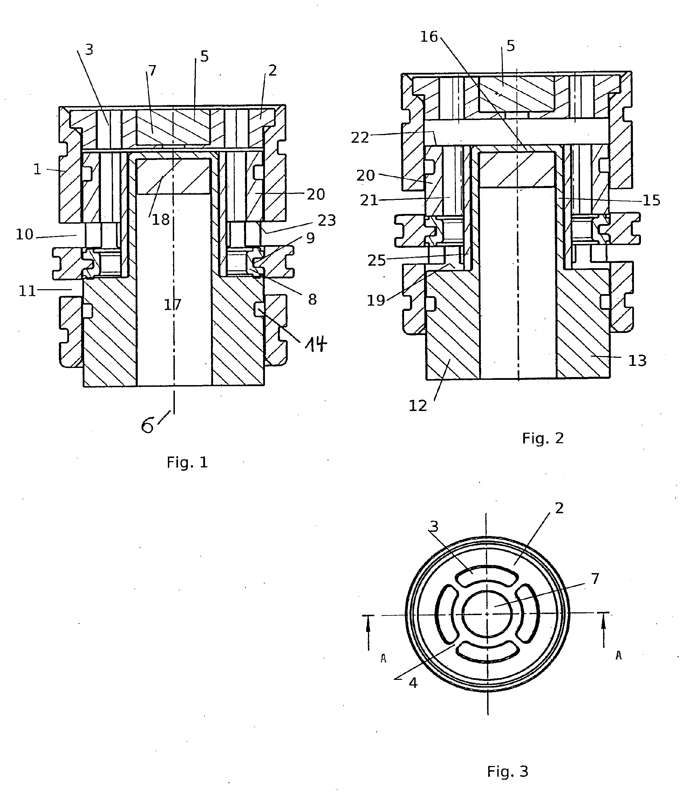

Das von der Erfindung vorgeschlagene Umschaltventil ist als Ventilkartusche ausgebildet. Diese Ventilkartusche ist in Figur 1 in einem Längsschnitt dargestellt. Die Ventilkartusche enthält eine äußere Hülse 1, die an beiden Stirnseiten offen ist. In das in Figur 1 und Figur 2 obere Ende dieser Hülse 1 ist ein Deckel 2 eingesetzt, der die Einlassseite des Ventils bildet. Der Deckel 2, der in Figur 3 in Stirnansicht zu sehen ist, enthält vier bogenförmige Schlitze 3, die eine Einlassöffnung 3 bilden. Die bogenförmigen Schlitze 3 sind durch radiale Stege 4 voneinander getrennt.

In der Mitte des Deckels 2 ist eine zylindrische Vertiefung 7 angeordnet, deren Wand konzentrisch zu den Schlitzen 3 und zu der Mittelachse 6 des Ventils ausgebildet ist. In dieser Vertiefung 7 ist ein zylindrischer die Vertiefung 7 ausfüllender Magnet 5 angeordnet.

Die Hülse 1 bildet in ihrem Innenraum zwei zylindrische Abschnitte gleichen Durchmessers. Getrennt sind diese beiden Abschnitte durch eine innere Rippe 9, auf der ein Dichtring 8 aufgesetzt ist. Dieser Dichtring 8 dient zum Abdichten an seinen beiden axialen Flächen.

In der Wand der Hülse sind oberhalb und unterhalb der erwähnten Rippe 9 Öffnungen vorhanden, die in der äußeren Mantelfläche der Hülse 1 ausmünden. Die Öffnungen 10 und die Öffnungen 11 sind jeweils als umlaufende Schlitze ausgebildet, die durch Längsstege 11a unterteilt sind.

Mit der Hülse 1 als Teil des Umschaltventils wirkt zusammen ein Ventilschließkörper 12, der in der Hülse 1 axial begrenzt verschiebbar angeordnet und geführt ist.

Der Ventilschließkörper 12 enthält ein Basisteil 13, das zylindrisch ausgebildet ist und dessen Außendurchmesser dem Innendurchmesser des unteren Teils der Hülse 1 entspricht. In der Mantelfläche dieses Basisteils 13 ist eine Nut 14 zur Aufnahme einer Dichtung ausgebildet. An dieses Basisteil 13 schließt sich ein Hülsenteil 15 an, das einen deutlich geringeren Durchmesser aufweist. Das Hülsenteil endet in einem Boden 16. Auch das Hülsenteil 15 ist an seiner Außenseite zylindrisch ausgebildet.

Beide einstückig ausgebildeten Teile 13, 15 sind hohl, enthalten also einen zylindrischen Innenraum 17. In den zylindrischen Innenraum 17 ist unmittelbar an den Boden 16 anschließend ein zweiter Magnet 18 eingesetzt und dort befestigt. Diese zweite Magnet 18 hat eine gegenüber dem ersten Magneten 5 umgekehrte Polarität.

Das Basisteil 13 bildet in Richtung auf das Einlassende des Umschaltventils eine ebene Schulterfläche 19.

Auf das Hülsenteil 15 des Ventilschließkörpers ist ein Ringelement 20 aufgesetzt, das durch das obere Ende der Hülse 1 eingesetzt ist, bevor der Deckel 2 angebracht wird. Dieses Ringelement 20 weist Durchgänge 21 auf, die in axialer Verlängerung der Öffnungen 3 des Deckels 2 angeordnet sind. Das Ringelement 20 ist in der Weise eingesetzt, dass seine dem Deckel 2 des Umschaltventils zugewandte Stirnseite 22 bündig mit dem Boden 16 des Hülsenteils 15 verläuft. Das Ringelement 20 weist eine ebene obere Stirnseite 22 auf.

An seiner mittleren Öffnung 24, deren Innendurchmesser dem Außendurchmesser des Hülsenteils 15 entspricht, weist das Ringelement 20 einen nach unten gerichteten hülsenartigen Fortsatz 25 auf, der bis zur Schulterfläche 19 reicht. Außerhalb des Fortsatzes 25 weist das Ringelement 20 eine untere ebene Schulterfläche 23 auf.

Wenn der Ventilschließkörper 12 in der Hülse 1 eingesetzt ist, nimmt er die in Figur 1 dargestellte Position ein, da die Magnete 5, 18 sich anziehen. In dieser Position ist ein geringer Abstand zwischen dem Boden 16 des Hülsenteils 15 einerseits und der Innenseite des Deckels 2 andererseits vorhanden. In dieser Position liegt die untere Schulterfläche 23 des Ringelements 20 bündig mit der Oberkante der ersten Auslassöffnung 10. Die Schulterfläche 19 des Basisteils 13 liegt an der Dichtung 8 an und verschließt die Öffnung 11.

Gelangt jetzt Wasser durch die den Einlass bildenden Schlitze 3 in das Innere des Umschaltventils, so fließt das Wasser durch die Auslassöffnung 10 nach außen. Gleichzeitig herrscht in dem Raum zwischen dem Deckel 2 und dem Boden 16 der Druck des Wassers. Bei steigendem Druck verschiebt dieser den Ventilschließkörper in der Weise, dass sich dieser Abstand vergrößert. Bei Erreichen eines bestimmten Drucks liegt dann die untere Schulterfläche 23 des Ringelements 20 auf dem Dichtring 8 an und verschließt dabei die Auslassöffnung 10. Gleichzeitig wird die Auslassöffnung 11 geöffnet. Da die Rückstellkraft der beiden Magnete mit zunehmendem Abstand voneinander geringer wird, tritt keine Regelschwingung oder ein sonstiger instabiler Zustand auf. Sobald der Wasserdruck nachlässt, indem kein Wasser mehr zu dem Umschaltventil gelangt, führt die Anziehungskraft der beiden Magnete dazu, dass der Ventilschließkörper in seine Ausgangsposition zurückkehrt.

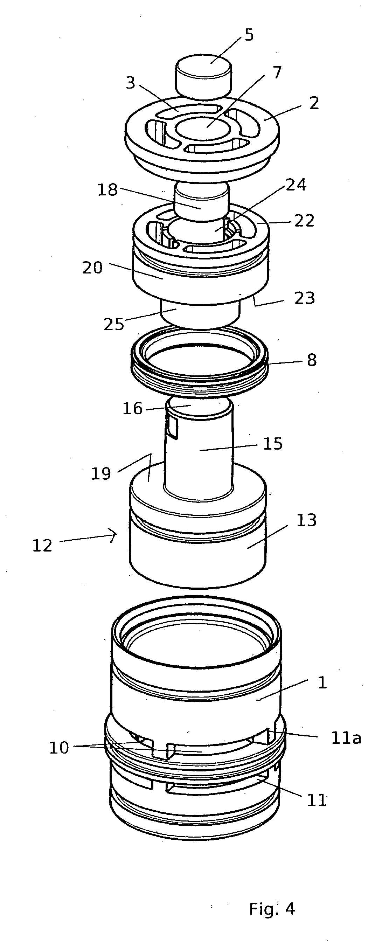

Die einzelnen bisher beschriebenen Elemente des Umschaltventils gehen aus der Explosionsdarstellung der Figur 4 im Einzelnen noch hervor.

## Patentansprüche

1. Druckbetätigtes Umschaltventil für eine Sanitäreinrichtung, mit
- einem Einlass (3) in das Ventil,
- zwei Auslässen (10, 11) aus dem Ventil,
- einem Ventilschließkörper (12), der durch mindestens einen Magneten (5) in eine Ausgangsposition beaufschlagt ist, durch Druck von einströmendem Wasser gegen die Beaufschlagung aus seiner Ausgangsposition herausbewegbar ist und bei nachlassendem Druck des einströmenden Wassers durch die Beaufschlagung mittels des mindestens einen Magneten in seine Ausgangsposition zurückbewegbar ist,
- wobei mit zunehmendem Abstand des Ventilschließkörpers von der Ausgangsposition der eine Auslass (10) geschlossen und der andere Auslass (11) geöffnet wird.

2. Umschaltventil nach Anspruch 1, bei dem der Ventilschließkörper (12) mit einem Kolben (15) mit einer dem Druck des Wassers im Einlassbereich des Ventils ausgesetzten Kolbenfläche (16) verbunden ist.

3. Umschaltventil nach Anspruch 2, bei dem der Ventilschließkörper (12) als Kolben (15) mit einer dem Druck des Wassers im Einlassbereich des Ventils ausgesetzten Kolbenfläche (16) ausgebildet ist.

4. Umschaltventil nach einem der vorhergehenden Ansprüche, bei dem das Umschaltventil als Ventilkartusche zum Einsetzen in ein Armaturengehäuse ausgebildet ist.

5. Umschaltventil nach einem der vorhergehenden Ansprüche, bei dem die Auslässe (10, 11) in einer Mantelfläche des Umschaltventils ausgebildet sind.

6. Umschaltventil nach einem der vorhergehenden Ansprüche, bei dem der Einlass (3) in einer Stirnfläche des Umschaltventils ausgebildet ist.

7. Umschaltventil nach einem der vorhergehenden Ansprüche, bei dem ein Magnet (5) und/oder ein ferromagnetisches Element in einem gehäusefesten Teil (7) des Umschaltventils angeordnet ist und mit einem ferromagnetischen Element des Ventilschließkörpers (12) und/oder einem Magneten (18) in dem Ventilschließkörper (12) zusammenwirkt.

8. Umschaltventil nach einem der vorhergehenden Ansprüche, bei dem in der Ausgangsposition des Ventilschließkörpers (12) ein Abstand zwischen dem Magneten (5) und einem Gegenelement (18) vorhanden ist.

9. Umschaltventil nach einem der vorhergehenden Ansprüche, bei dem in der Ausgangsposition des Ventilschließkörpers (12) der eine Auslass (10) aus dem Ventil geöffnet und der andere Auslass (11) aus dem Ventil geschlossen ist.

10. Umschaltventil nach einem der Ansprüche 1 bis 8, bei dem in der Ausgangsposition des Ventilschließkörpers (12) beide Auslässe (10, 11) aus dem Ventil geschlossen sind.

## Claims

1. Pressure-actuated switchover valve for a sanitary device, comprising
- an inlet (3) into the valve,
- two outlets (10, 11) out of the valve,
- a valve closing body (12), which is forced into a starting position by at least one magnet (5), is movable out of its starting position against the force of the magnet by pressure of inflowing water, and is movable back to its starting position by the force of the at least one magnet when the pressure of the inflowing water decreases,
- wherein, as a distance of the valve closing body (12) from the starting position increases, one of the outlets (10) is closed and the other outlet (11) is opened.

2. Switchover valve according to Claim 1, wherein the valve closing body (12) is connected with a piston (15) having a piston surface (16) that is subjected to the pressure of the water in an inlet region of the valve.

3. Switchover valve according to Claim 2, wherein the valve closing body (12) is formed as the piston (15) having a piston surface (16) that is subjected to the pressure of the water in the inlet region of the valve.

4. Switchover valve according to any one of the preceding claims, wherein the switchover valve is in the form of a valve cartridge to be inserted into a fitting housing.

5. Switchover valve according to any one of the preceding claims, wherein the outlets (10, 11) are formed in a lateral surface of the switchover valve.

6. Switchover valve according to any one of the preceding claims, wherein the inlet (3) is formed in an end face of the switchover valve.

7. Switchover valve according to any one of the preceding claims, wherein a magnet (5, 18) and/or a ferromagnetic element is arranged in a housing-fixed part of the switchover valve and interacts with a ferromagnetic element of the valve closing body (12) and/or with a magnet (18) in the valve closing body (12).

8. Switchover valve according to any one of the preceding claims, wherein, in the starting position of the valve closing body (12), there is a distance between the magnet (5) and an opposing element.

9. Switchover valve according to any one of the preceding claims, wherein, in the starting position of the valve closing body (12), one of the outlets (10) out of the valve is open and the other outlet (11) out of the valve is closed.

10. Switchover valve according to any one of Claims 1 to 8, wherein, in the starting position of the valve closing body, both outlets out of the valve are closed.

## Revendications

1. Soupape de commutation à actionnement par pression pour un mécanisme sanitaire, avec :
- une admission (3) en direction de la soupape ;
- deux sorties (10, 11) hors de la soupape ;
- un obturateur de soupape (12), lequel est soumis aux sollicitations d'au moins un aimant (5) dans une position de départ, et lequel peut être sorti hors de sa position de départ sous l'effet de la pression d'un afflux d'eau venant contrer la sollicitation de l'au moins un aimant (5), et lequel peut être déplacé de nouveau dans sa position de départ quand la pression exercée par l'afflux d'eau diminue du fait de la sollicitation exercée au moyen de l'au moins un aimant (5) ;
dans laquelle l'une des sorties (10) est fermée et l'autre sortie (11) respective est ouverte au fur et à mesure que s'accroît l'écart de l'obturateur de soupape par rapport à la position de départ.

2. Soupape de commutation selon la revendication 1, dans laquelle l'obturateur de soupape (12) est raccordé à un piston (15) avec une surface de piston (16) qui est exposée à la pression de l'eau dans la zone d'admission de la soupape.

3. Soupape de commutation selon la revendication 2, dans laquelle l'obturateur de soupape (12) se présente sous la forme d'un piston (15) avec une surface de piston (16) qui est exposée à la pression de l'eau dans la zone d'admission de la soupape.

4. Soupape de commutation selon l'une des revendications précédentes, dans laquelle la soupape de commutation se présente sous la forme d'une cartouche de soupape destinée à être insérée dans un carter de robinetterie.

5. Soupape de commutation selon l'une des revendications précédentes, dans laquelle les sorties (10, 11) sont conçues dans une surface de gainage de la soupape de commutation.

6. Soupape de commutation selon l'une des revendications précédentes, dans laquelle l'admission (3) est conçue dans une surface frontale de la soupape de commutation.

7. Soupape de commutation selon l'une des revendications précédentes, dans laquelle un aimant (5) et/ou un élément ferromagnétique est/sont disposé(s) dans une pièce (7) de la soupape de commutation, laquelle pièce est fixée de manière rigide au carter de robinetterie, et interagit ou interagissent avec un élément ferromagnétique de l'obturateur de soupape (12) et/ou avec un aimant (18) dans l'obturateur de soupape (12).

8. Soupape de commutation selon l'une des revendications précédentes, dans laquelle il existe une certaine distance entre l'aimant (5) et l'élément opposé (18), dans la position de départ de l'obturateur de soupape (12).

9. Soupape de commutation selon l'une des revendications précédentes, dans laquelle, dans la position de départ de l'obturateur de soupape (12), l'une des sorties (10) hors de la soupape est ouverte et l'autre sortie (11) respective hors de la soupape est fermée.

10. Soupape de commutation selon l'une des revendications 1 à 8, dans laquelle, dans la position de départ de l'obturateur de soupape (12), les deux sorties (10, 11) hors de la soupape sont fermées.
